# EUROPEAN PATENT APPLICATION

(11) **EP 3 499 440 A1**
(43) Date of publication of application: **19.06.2019**
(21) Application number: 17208249.7
(22) Date of filing: 18.12.2017
(51) Int. Cl.: G06Q 10/08, G06Q 30/00, G06Q 30/06

(54) **AUTHENTICATION OF GOODS**

(71) Applicant: Mastercard International Incorporated, Purchase NY 10577 (US)
(72) Inventor: ROBERTS, David Anthony, Warrington, WA4 5RD (GB); SMETS, Patrick, 2560 Nijlen (BE)
(74) Representative: Lawrence, Richard Anthony

(57) **Abstract**

A method for a goods authentication infrastructure to authenticate goods associated with a unique identifier is provided. The method comprises associating a tokenised identifier for the goods with the unique identifier of the goods; and providing the tokenised identifier and cryptographic elements to an authentication device associated with the owner of the goods. The cryptographic elements can be used by the authentication device to generate a message with a digital authentication code and the digital authentication code can be used by a computing device receiving the message to verify the content of the message. A single tokenised identifier is associated with the unique identifier of the goods at any one time. A method for authenticating goods using an authentication device is also provided, as is an authentication device configured to perform the method.

## Description

### Field of Invention

This invention relates generally to the authentication, tracking and transfer of ownership of goods. Particular embodiments relates to a method and system to verify the authenticity of goods, and/or to track ownership of goods.

### Background of Invention

Valuable goods are frequently issued with a reference number, and can in some cases be associated with a certificate that describes and guarantees the quality of the goods. For example, diamonds can be associated with IGI Diamond Reports that give a trusted assessment of a diamond's cut, colour, clarity and carat weight according to strict international standards. Similar evaluation systems exist in other industries. Such certificates provide some assurance about the authenticity and quality of a good when buying or selling the goods. Certificates may also be associated with a guarantee on the good. Some certificates may be associated with the good when it is sold, for example by an approved retailer.
The goods and certificate will often be linked via a unique number (e.g. a serial number) that is associated with the good at the time of manufacturing or evaluation (e.g. by a certification body). This number can be referenced on the certificate, and registered in the good itself, for example via printing, engraving, embossing, laser etching, etc. Therefore, someone wishing to acquire a good associated with a certificate can check the unique number on the good, verify that it matches the unique number on a certificate provided, and obtain the description of the good either directly from a paper certificate, or where available via e.g. entering a certificate number on the web portal of a certification body.
This system has many disadvantages. Firstly, a person wishing to acquire some goods may encounter difficulties in accessing the content of a certificate in order to be able to check that the information in the certificate matches the goods. Secondly, even if a certificate provided with the goods readily contains all of the information about the goods that a person wishing to acquire some goods may want to see, they may still want to verify that the certificate itself is authentic. Further, a person wishing to acquire the goods may want to be able to verify that the person that they are acquiring the goods from is the legitimate owner of the goods, or is acting on their behalf. These failures in the tracking and authentication system represent impediments to the efficient trade of valuable goods.
Therefore, it would be desirable to provide a simpler and more reliable system for authentication and tracking of goods.

### Summary of Invention

According to a first aspect, there is provided a method for a processor of a goods authentication infrastructure to authenticate goods associated with a unique identifier. The method comprises the processor associating a tokenised identifier for the goods with the unique identifier of the goods; and providing the tokenised identifier and cryptographic elements to an authentication device, for example an authentication device associated with the owner of the goods. The cryptographic elements can be used by the authentication device to generate a message with a digital authentication code and the digital authentication code can be used by a computing device receiving the message to verify the content of the message. A single tokenised identifier is associated with the unique identifier of the goods at any one time.
Associating a tokenised identifier for the goods with the unique identifier of the goods may comprise computing a tokenised identifier. Associating a tokenised identifier for the goods with the unique identifier of the goods may comprise recording the unique identifier of the goods and the corresponding tokenised identifier in a database.
In embodiments, the method further comprises recording the tokenised identifier and the unique identifier of the goods in one or more databases.
In some embodiments, the method further comprises the processor receiving a request from a computing device to verify the content of a message comprising the tokenised identifier and digital authentication code, the processor verifying the authenticity and integrity of the message using the digital authentication code, and the processor detokenising the tokenised identifier to determine the unique identifier of the goods. Optionally, the message may contain information about the goods, and the method further comprises the processor communicating with a goods management processor to request an authorisation message if the goods management processor can verify the information in the message.
In embodiments, the method further comprises the processor blocking a tokenised identifier associated with a unique identifier of goods before generating a new identifier. Optionally, the method may further comprise the processor sending instructions to an authentication device holding the tokenised identifier that has been blocked to automatically block the tokenised identifier.
In embodiments, the authentication device is a modified payment card, chip or computing device executing a payment application and the tokenised identifier and cryptographic element form a virtual card hosted on the authentication device.
In embodiments, the goods authentication infrastructure is part of a transaction infrastructure. For example, the goods authentication infrastructure may be a token service provider.
According to a second aspect, there is provided a processor configured to perform the method of any of the embodiments of the first aspect.
According to a third aspect, there is provided a method for authenticating goods using an authentication device. The method comprises the authentication device receiving and recording a tokenised identifier and cryptographic elements associated with the tokenised identifier. The method additionally comprises receiving a request to authenticate goods from a computing device; generating an authenticated message comprising the tokenised identifier and information identifying the owner of the authentication device; and sending the authenticated message to the computing device. The tokenised identifier is associated with a unique identifier on the goods, and a single tokenised identifier is associated with the unique identifier of the goods at any one time.
In embodiments, authenticating goods comprises authenticating the holder of the authentication device as the genuine owner of the goods, and the method further comprises: the authentication device requesting the holder of the authentication device to provide authentication credentials; the authentication device verifying the authentication credentials; the authentication device recording the outcome of this authentication in cryptographic elements associated with the tokenised identifier; and the authentication device sending the cryptographic elements to the computing device as part of the authenticated message. When the computing device has received the cryptographic elements as part of the authenticated message, it is able to communicate with a processor of a goods authentication infrastructure to verify the authentication credentials. In some embodiments, the method further comprises the computing device communicating with a goods authentication infrastructure to validate the cryptographic elements.
Authentication credentials may comprise any of: a PIN, password, pattern, biometric data (such as fingerprint, iris, voice, etc.), that can be recognised by the authentication device.
In embodiments, the method further comprises the authentication device requesting information from the computing device, wherein the information identifies the owner of the computing device. Optionally, the authenticated message may comprise information identifying the owner of the computing device.
In embodiments, the method further comprises the authentication device sending a message to a processor of a goods authentication infrastructure to record the owner of the computing device as owner of the goods.
Optionally, the method may further comprise the authentication device receiving a message from a processor of the goods authentication infrastructure confirming that the tokenised identifier is no longer associated with the goods and the authentication device deleting the tokenised identifier and cryptographic elements associated with the tokenised identifier.
According to a fourth aspect, there is provided an authentication device configured to perform the method of any of the embodiments of the second aspect.
Optionally, the authentication device may be a modified payment card or chip interacting with a computing device, or a computing device executing a payment application and the tokenised identifier and cryptographic elements form a virtual card hosted on the authentication device.

Using this approach, it is possible to verify the authenticity and ownership of valuable goods, as well as securely transfer the ownership of goods to a new owner, who will then be able to verify and prove the authenticity and ownership of the goods. Advantageously, this approach can be implemented using existing elements of a banking infrastructure and transaction protocols, and guarantees that goods associated with unique identifiers are uniquely tracked in a reliable manner without requiring issuance of new physical proofs of authenticity or ownership when a good is traded.

### Brief Description of Figures

Embodiments of the invention will now be described, by way of example, with reference to the accompanying Figures, of which:
Figure 1 shows schematically relevant elements of a tracking and authentication system in which embodiments of the invention may be used;
Figure 2 shows in flow diagram a method of verifying ownership of goods associated with an authentication device, according to embodiments of the invention;
Figure 3 shows in flow diagram form a method of recording a change of ownership of goods associated with an authentication device, according to embodiments of the invention;
Figure 4 shows schematically a method of verifying the ownership of goods associated with an authentication device, according to an embodiment of the invention; and
Figure 5 shows schematically a method of changing the ownership of goods associated with an authentication device, according to an embodiment of the invention.

### Description of Specific Embodiments

Specific embodiments of the invention will be described below with reference to the Figures. The invention provides a method of tracking and authenticating goods, wherein the identity of the goods is associated with an authentication device, and the authentication device can be used to verify the authenticity and ownership of the goods. The method additionally allows the secure and traceable transfer of ownership of the goods from one authentication device to another. According to the invention, elements and protocols of a transaction infrastructure are reused to perform the authentication and transfer of ownership. In particular, the invention may be performed in the context of an EMV transaction system. Advantageously, this allows flexible and reliable authentication and tracking of goods with a minimum overhead on existing systems for goods and transactions management.

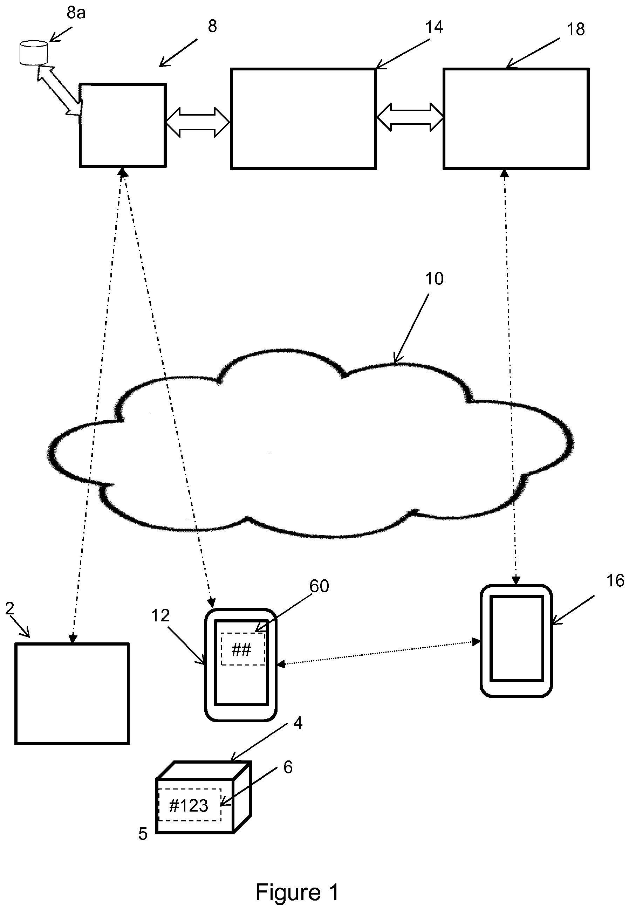

Figure 1 shows schematically relevant elements of a tracking and authentication system in which embodiments of the invention may be used. A goods provider 2, such as a manufacturer or a retailer, associates some goods 4 with a unique identifier 6 (also referred to herein as reference number by analogy to reference numbers that are commonly associated with valuable goods). The identifier 6 may comprise elements selected from: numbers, alphanumeric characters, any other types of characters, and combinations thereof. In embodiments, the identifier 6 comprises a reference number associated with the goods at the time of production, evaluation, certification etc., for example a serial number. The goods provider communicates with a goods management processor 8 provided by a goods manager via a network 10 (either through a dedicated channel or through a secure communication mechanism over a public or insecure channel) to associate the goods with information regarding any of the goods provenance, quality, ownership etc. and store this information in one or more databases 8a. The function of the goods management processor 8 is to maintain a record, on the one or more databases 8a, of information associated with the goods 4, via the unique identifier 6. This information may include the owner of the goods and /or any characteristics that may be of importance to identify, authenticate or assess the value of the goods. In embodiments, the goods provider 2 may additionally perform the functions of the goods management processor 8. For example, the goods management processor may be provided by the manufacturer of the goods themselves, a retailer, a certification body, etc.
Optionally, the goods management processor 8 may verify the identity and information provided by the goods provider 2 before requesting association of an authentication device 12 with the unique identifier 6 of goods 4. For example, the goods provider 2 may be requested to identify themselves to the goods management processor 8 by providing e.g. a login and password or PIN. This allows the goods management processor 8 to verify that the request originates from a goods provider 2 that is known to the goods management processor 8. The goods management processor 8 may also optionally verify that the goods information matches what is expected from the identified goods provider 2, that the information provided complies to some (possibly goods-dependent criteria) etc. As the skilled person would understand, the type of information provided, as well as the criteria, processes and possibly parties involved in verifying this information may vary depending on the nature of the goods 4.
The goods management processor 8 communicates with a goods authentication infrastructure 14 in order to associate a tokenised identifier 60 with every unique identifier 6. The tokenised identifier 60 may comprise elements selected from: numbers, alphanumeric characters, any other types of characters, and combinations thereof.
In particular, the goods authentication infrastructure 14 generates a tokenised identifier 60 for every unique identifier 6. The goods authentication infrastructure 14 may record the relationship between unique identifiers 6 and their currently associated (and optionally previously associated) tokenised identifiers 60. The tokenised identifier 60 associated with the unique identifier 60 of goods 4 is then stored on an authentication device 12.
The authentication device 12 may be a computing device comprising a processor and a memory, the memory storing an application that, when executed by the processor, enables transactions EMV-like transactions to be performed using a virtual card, as will be explained further below. For example, an application such as the Mastercard cloud-based payment solution can be used for storing the tokenised identifier 60 and the Mastercard Digital Enablement Service may be used to provision the tokenised identifier 60 to such application. For example, the authentication device 12 may be a mobile phone.
In other embodiments, the authentication device 12 may be a card, such as a chip card with a processor and a memory. Software may be stored on the memory and executed by the processor, enabling the card to take part in transactions in an EMV transaction system, such as for example the Mastercard M/Chip Advance application and a contact or contactless EMV kernel. In embodiments, the authentication device 12 may be a chip (without a physical card to carry the chip), which may be for example embedded in the product or its packaging.
The goods authentication infrastructure 14 may additionally maintain a record of the unique identifier 6 associated with a tokenised identifier 60. As the skilled person would understand, multiple tokenised identifiers 60 may be stored on the authentication device 12 in embodiments where the authentication device 12 is a computing device.
By analogy to the organisation of a payment system, the goods manager in providing the goods management processor 8 performs functions that are similar to those performed by a card issuing bank, i.e. it stores a unique identifier (i.e. a personal account number, PAN) associated with information such as the account owner, and request digitization of the PAN from a third party, i.e. the goods authentication infrastructure 14. Following this analogy, the goods authentication infrastructure 14 performs functions that are similar to those performed by a Token Service Providers, such as Mastercard, i.e. it receives a real PAN and associates it with a tokenised PAN that can be used instead of the real PAN to take part in transactions. In convenient embodiments, the goods authentication infrastructure 14 may be a banking infrastructure such as Mastercard.
The goods authentication infrastructure 14 and goods management processor 8 comprise a plurality of switches, servers and databases, and are not described further here as the details of the goods authentication infrastructure 14 and goods management processor 8 used are not necessary for understanding how embodiments of the invention function and may be i mpl emented.
In embodiments, the goods management processor 8 may provide a range of unique identifiers 6 to the goods authentication infrastructure 14, and the goods authentication infrastructure 14 in returns provides a range of tokenised identifiers 60, one for each unique identifier 6.
Through its interaction with the goods authentication infrastructure 14, the goods management processor 8 additionally associates the tokenised identifier 60 with cryptographic elements enabling the authentication device 12 to take part in secure transactions, such as for example verifying the authenticity of the tokenised identifier 60 or the holder of the authentication device 12. These cryptographic elements may include the private key of a public key pair, a public key certificate and a set of symmetric keys.
Still following the analogy with a payment system, the authentication device 12 may perform functions equivalent to a payment card (with the exception that a tokenised PAN is stored on the card rather than the real PAN, as would be the case for a conventional bank card), or computing device executing a digital wallet application (e.g. Masterpass) or a mobile payment application (e.g. ApplePay etc., enabled by services such as the Mastercard Digital Enablement Service), storing a tokenised PAN and associated cryptographic tools as mentioned above. In embodiments, the authentication device 12 may also perform the functions of a payment device.
Using the authentication device 12, the goods provider 12 may be able to interact with a terminal 16 of a potential new owner (not shown). For example, the goods provider 2 may be a merchant holding the goods 4 and associated authentication device 12, and the potential new owner may be a buyer.

The goods provider 2 may also communicate with the goods management processor 8 to directly access information recorded by the goods management processor 8, using the tokenised identifier 60 on the authentication device 12, via a terminal (not shown) or server associated with the goods management processor 8 or via a terminal associated with the goods provider 2. By reference to a payment system, this operation would be equivalent to a cardholder (in the broad sense of the holder of a physical card or a virtual card digitised in a payment application) interacting with the card issuer via a terminal or via an application provided by the issuer, to access information in relation to the account associated with the card.
The terminal 16 of the potential new owner may be any computing device equipped with a memory and processor, wherein the memory holds software that when executed by the processor, enables the terminal 16 to communicate with the authentication device 12 and with a trusted third party 18. In embodiments where the authentication device 12 is a computing device, such as a mobile computing device, the authentication device 12 may be equipped with an antenna and associated software and hardware to enable communication with the terminal by NFC. In embodiments where the authentication device 12 is a chip card, the chip may comprise an antenna and associated hardware and software to enable communication with a terminal (e.g. terminal 16 of the potential new owner) by NFC and associated contactless card protocols such as those defined under ISO/IEC 14443.
In embodiments where the terminal 16 is a computing device, the computing device may also perform the functions of a payment device and execute a digital wallet application (e.g. Masterpass) or a mobile payment application (e.g. ApplePay etc., enabled by services such as the Mastercard Digital Enablement Service)..
The terminal 16 of the potential new owner may communicate with a trusted authentication service 18. The trusted authentication service 18 may use the information provided by the authentication device 12 to the terminal 16 to verify the authenticity and integrity of the data received from the goods provider 8, using the cryptographic elements associated with the tokenised identifier 60, for instance a Message Authentication Code (MAC) created using a secret key associated with the tokenised identifier 60 of the goods 4. Additionally, the trusted authentication service 18 may communicate with the goods management processor 8 via the goods authentication infrastructure 14 to verify that any information provided by the authentication device 12 or input by the potential new owner into the terminal 16 is accurate. The trusted authentication service 18 comprises a plurality of switches, servers and databases, and is not described further here as the details of the trusted authentication service 18 used are not necessary for understanding how embodiments of the invention function and may be implemented.
By reference to a payment system, the trusted authentication service 18 performs a function similar to that of an acquiring bank, in that they are a party trusted by the party (which is analogous to the potential new owner) that may want to engage in a transaction with a card or payment device (the authentication device, in this analogy), and has the ability to directly verify the authenticity of the card or payment device storing a virtual card using cryptographic elements associated with the card or virtual card as well as to verify information with the issuer of the card (issuing bank, the goods management processor 8 in this analogy) by communicating with a payment infrastructure (the goods authentication infrastructure 14 in this analogy) which connects the issuing and acquiring banks (the goods management processor 8 and trusted authentication service 18 in this analogy).
In embodiments, the authentication device 12 and terminal 16 of the potential new owner may interact remotely, and need not be in physical proximity in order to exchange information necessary to verify the authentication device 12. In such embodiments, the authentication device 12 (e.g. if it is a computing device) or a computing device of the goods provider 8 interacting with the authentication device 12 (e.g. if the authentication device 12 is a card or chip) may communicate with the terminal 16 using protocols analogous to EMV-like protocols for remote payments, such as Mastercard's Digital Secure Remote Payment (DSRP).
In embodiments, communication between the elements in the system above may be through a protected channel, for example over a public network by use of encryption.

Should the ownership of the goods 4 change, for example because the goods provider 2 sells the goods to the potential new owner, the infrastructure above may be used to change the ownership details recorded by the goods management processor 8 and associate the unique identifier 6 of the goods 2 with a new tokenised identifier 60 stored on an authentication device 12 now associated with the new owner, as will be further explained below.

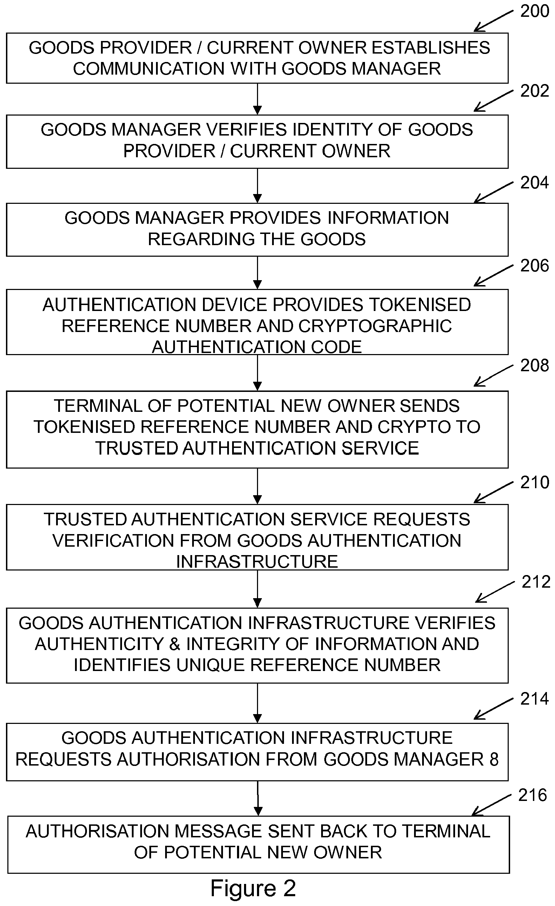

Figure 2 shows in flow diagram a method of verifying ownership of goods associated with an authentication device, according to embodiments of the invention. In optional preliminary step 200, the goods provider 2 (for the purpose of this process the goods provider 2 may be a manufacturer, wholesaler, retailer or private owner, i.e. it is the current registered owner of the goods), establishes a communication with the goods management processor 8. This may be done, e.g. through an online portal or application executed on a computing device. The goods management processor 8 may optionally verify 202 the identity of the goods provider 2. This may comprise the goods provider 2 entering identification and credentials at an online portal of the goods management processor 8, providing authentication information using a mobile application on the authentication device 12 (if the authentication device 12 is a computing device) or providing authentication information at a terminal associated with the goods provider 2 (e.g. a point of sale terminal, mobile or fixed computing device executing an application that can interact with the authentication device 12 if the authentication device is a card or chip). At step 204, the goods management processor 8 may provide information regarding the goods 4, including for example the ownership of the goods, a description of the goods, information regarding the value or quality of the goods, etc.
While the goods provider 2 may be able to show this information to the potential new owner, the potential new owner would like to be able to verify this information. Therefore, at step 206, the authentication device 12 provides information to the terminal 16 of the potential new owner, including the tokenised identifier 60 and a cryptographic authentication code generated using the cryptographic elements that were provided to the authentication device 12 upon creation of the tokenised identifier 60 as described above. At step 208, the terminal 16 of the potential new owner communicates this information to the trusted authentication service 18, optionally together with additional information requests, indicating for example information that the potential new owner would like to confirm about the goods 4. The trusted authentication service 18 then communicates 210 the information obtained at step 206 to the goods authentication infrastructure 14. The goods authentication infrastructure 14 uses the cryptographic authentication code to verify 212 the authenticity and integrity of the information received, and uses the tokenised identifier 60 to identify the unique identifier 6 of the goods 4. The goods authentication infrastructure 14 then communicates 214 with the goods management processor 8, in order to confirm the ownership information and any other information that may have been requested at step 204. The goods management processor 8 confirms the ownership by sending 216 an authorisation message to the goods authentication service 14, and the goods authentication service 14 sends this message back to the terminal 16 of the potential new owner, via the trusted authentication service 18. The potential new owner now has confidence that the information provided was authentic.

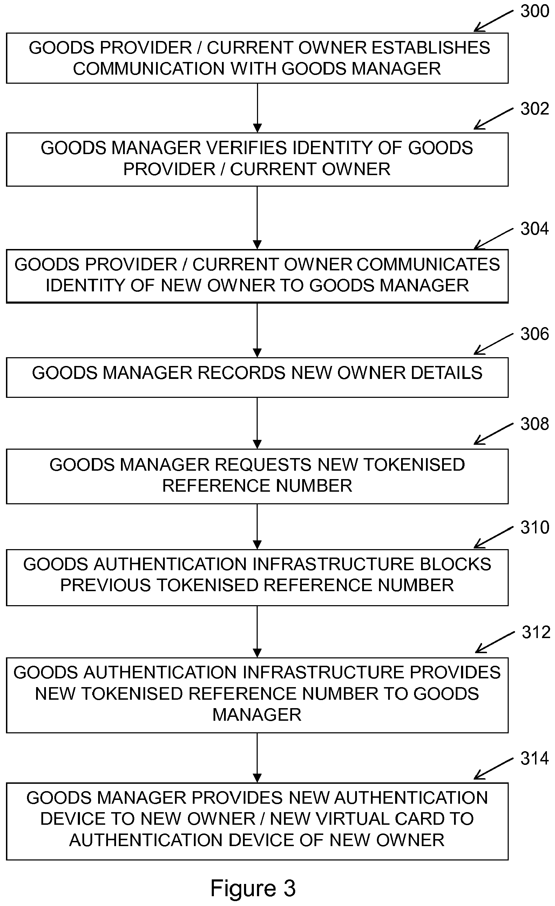

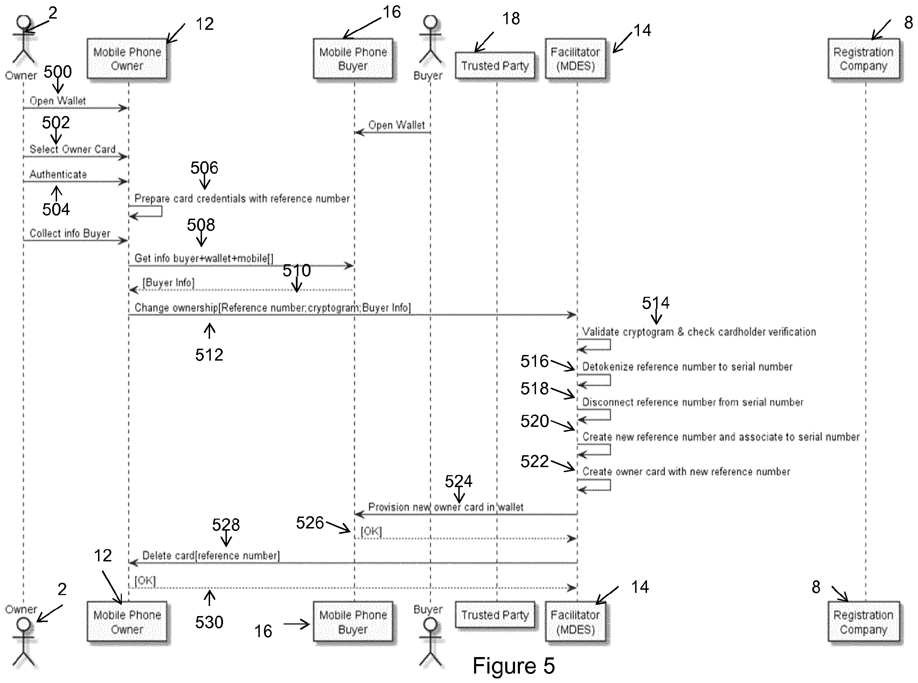

Figure 3 shows in flow diagram form a method of recording a change of ownership of goods associated with an authentication device, according to embodiments of the invention.
At step 300, the goods provider 2 (for the purpose of this process the goods provider 2 may be a manufacturer, wholesaler, retailer or private owner, i.e. it is the current registered owner of the goods), establishes a communication with the goods management processor 8, in order to register the potential new owner as owner of the goods. Optionally, the goods management processor 8 may verify 302 the identity of the goods provider 2. This may comprise the goods provider 2 entering identification and credentials at an online portal of the goods management processor 8, providing authentication information using a mobile application on the authentication device 12 (if the authentication device 12 is a computing device) or providing authentication information at a terminal associated with the goods provider 2 (e.g. a point of sale terminal, mobile or fixed computing device executing an application that can interact with the authentication device 12 if the authentication device is a card or chip).
At step 304, the goods provider 2 communicates the details of the new owner to the goods management processor 8. Still using the analogy to a payment system, the operations described herein by reference to Figure 3 are similar to a cardholder closing an account and the same account being opened for another cardholder.
In other embodiments, for example as explained in relation to Figure 5, the goods provider 2 may instead establish a communication with the goods authentication infrastructure 14, who may optionally verify the identity of the goods provider 2, and may optionally receive the details of the new owner. In some such embodiments, the goods authentication infrastructure 14 may contact the goods management processor 8 to communicate the details of the new owner.
Still using the analogy to a payment system, if ownership is not recorded by the goods management processor 8 and the goods provider 2 communicates with the goods authentication infrastructure 14 to request that a new tokenised identifier 60 be issued (see below), it is the equivalent of re-digitizing an account, i.e. associating a different tokenised PAN to the same PAN (real financial account number).
Optionally, if the authentication device 12 holds multiple tokenised identifiers 60 (i.e. the authentication device is currently associated with multiple instances of goods 4, or if the goods provider 2 is the current registered owner of multiple instances of goods 4, each with their unique identifier 6 and associated tokenised identifier 60), the goods provider 2 may first choose the goods that they wish to change the registered owners for. Still by analogy with a payment system, this is similar to a cardholder using a banking application where multiple accounts are currently associated with the cardholder, and the cardholder must choose which account to close or re-digitize.

The goods management processor 8 then records 306 the new owner details and sends 308 a message to the goods authentication infrastructure 14 requesting that a new tokenised identifier 60 be issued, which replaces the previous tokenised identifier 60 associated with the specific unique identifier 6 of the goods which ownership is being changed. The goods authentication infrastructure 14 blocks 310 the previous tokenised identifier 60, and provides 312 a new tokenised identifier 60.
At step 314, the goods management processor 8 provides the new tokenised identifier 60 to the new owner, together with cryptographic elements as above. This may be in the form of a new authentication device 12 on which the tokenised identifier 60 and cryptographic elements are recorded, e.g. when the authentication device 12 is a card. Alternatively or additionally, this can be in the form of a new virtual card (i.e. tokenised identifier and associated cryptographic elements) stored on the authentication device 12 of the new owner, where the authentication device 12 is a computing device. In embodiments where the new authentication device 12 is a computing device, the terminal 16 of the potential new owner may become the authentication device 12 of the now-owner of the goods. In embodiments where a physical card was issued as an authentication device 12, the card that is associated with the old tokenised identifier 60 may be blocked at the goods authentication infrastructure 14 and goods management processor 8, or may be blocked through script on the card itself, by interaction with a terminal for example at the goods provider 2. In embodiments, the goods management processor 8 and/or the goods authentication infrastructure may require the card associated with the old tokenised identifiered 60 to be presented to a terminal to be blocked through script, before a new tokenised identifier 60 can be issued. Should the now-owner of the goods wish to transfer ownership of the goods 2 to yet another potential new owner, the process described in Figure 2 can be repeated with the now-owner of the goods replacing the goods provider 2.

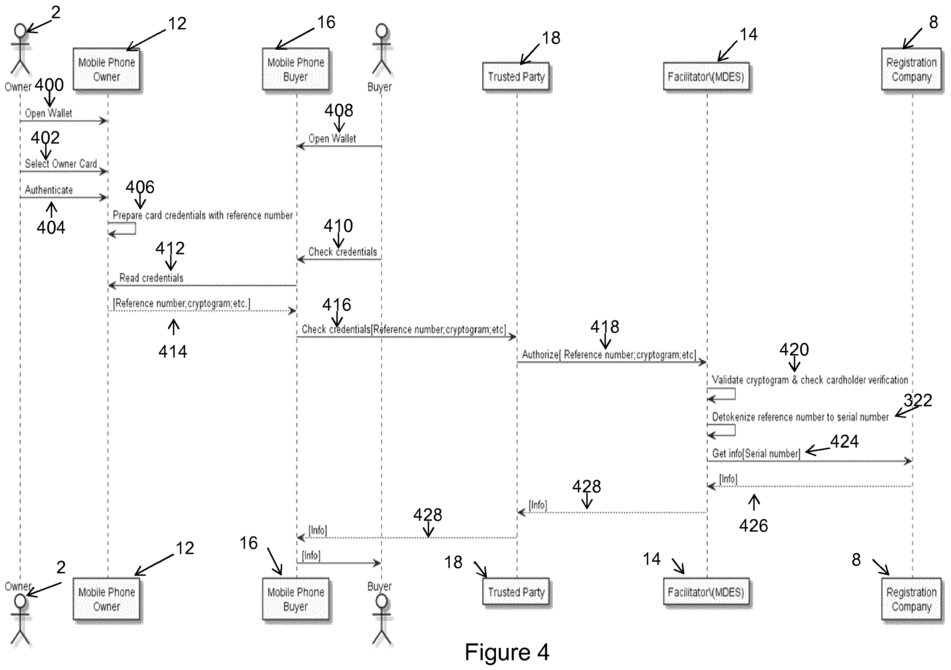

Figure 4 shows schematically a method of verifying the ownership of goods associated with an authentication device, according to an embodiment of the invention. In the embodiment shown, the current owner of goods (e.g. the goods provider 2) is provided with an authentication device 12 in the form of a mobile phone (though as the skilled person would understand, other computing device, fixed or mobile may be used), which is equipped with an application that performs a function similar to a mobile payment application (for example the Mastercard Cloud Based Payment mobile payment application), referred to as "wallet" on Figure 4. For simplicity, the application will be referred to as a mobile payment application, although as the skilled person would understand, the application may in practice be a separate application that performs similar functions. In embodiments the application may be a mobile payment application. The tokenised identifier 60 associated with goods 4 that the owner may wish to sell is stored in the mobile payment application, together with its associated cryptographic elements, thereby forming a set of data that is equivalent to a virtual payment card. The owner (or goods provider 2) can therefore open 400 the mobile payment application on their mobile device 12, select 402 the virtual card that they wish to use (wherein each virtual card comprises a tokenised identifier 60 in place of a tokenised PAN that would be part of a virtual card in a payment system, and each tokenised identifier 60 is associated with an instance of goods 4, itself associated with a unique identifier 6 that was used by the goods authentication infrastructure 14 to generate the tokenised identifier 60, as explained above). The owner (or goods provider 2) can then authenticate 404 themselves on the mobile payment application, for example using known consumer device cardholder verification methods (e.g. fingerprint, mobile PIN, etc.). The mobile payment application will then prepare 406 card-like credentials using the tokenised identifier 60. The card-like credentials may include the tokenised identifier 60 and a cryptogram which represents a digital authentication code of the message and allows the recipient to verify the source and content of the message. By analogy to a payment system, this is equivalent to a payment card preparing a cryptogram based on information held at the card and optionally information regarding the transaction that the card is taking part in, and communicating this to a merchant terminal for authentication. In simpler terms, this is a process similar to a transaction with a dummy amount, between a card (the authentication device 2 holding a virtual card wherein the tokenised identifier is analogous to a tokenised PAN) and a merchant point of sale terminal (the terminal 16 of the potential new acquirer), also known as a 'status inquiry'.
In the embodiment shown on Figure 4, the potential new owner (referred to as "buyer" on the figure) is also equipped with a terminal 16 which is a mobile phone (or other computing device) equipped with a mobile payment application, as described above. The potential new owner may open 408 the mobile payment application on their mobile phone (terminal 16) and request 410 to check the credentials of a virtual card (tokenised identifier 60 and associated cryptographic elements) hosted on the mobile payment application on the seller's mobile phone (authentication device 12). The terminal 16 (buyer's mobile phone) therefore communicates with the authentication device 12 (seller's mobile phone) to read 412 the credentials that were prepared at step 306. The credentials are sent 414 by the authentication device 12 to the terminal 16.
The terminal 16 will then send 416 these credentials to a trusted party, the trusted authentication service 18. Still by analogy to a payment system, this is similar to a merchant terminal sending card credentials to an acquiring bank, in order to check those credentials before carrying on with the transaction. The trusted authentication service 18 can then communicate 418 with the goods authentication infrastructure 14 (referred to on Figure 4 as ""facilitator", such as Mastercard's Digital Enablement Service, MDES) which provided the tokenised identifier 60 on behalf of the goods manager. The goods authentication infrastructure 14 validates 420 the cryptogram and checks the cardholder's credentials, then detokenizes 422 the tokenised identifier 60, i.e. retrieves the unique identifier 6 (referred to on Figure 4 as "serial number") associated with the tokenised identifier 60. Using this unique identifier 6, the goods authentication infrastructure 14 is able to request 424 the information that the terminal 16 of the potential new owner has requested, from the goods management processor 8. For example, this information may include a simple request to check that the authentication device 12 is authentic and that it is associated with the expected goods 4, for example by returning an approval message (simply confirming that the credentials provided by the authentication device 12 have been successfully verified), and optionally any additional information such as the unique identifier 6 of the goods, a description, attributes of the goods 4, etc. This information is then sent 426 by the goods management processor 8 to the goods authentication infrastructure 14, and routed back 428 to the potential new owner's terminal 16 via the trusted authentication service 18. Still by analogy with a payment system, this is equivalent to an acquiring bank (here the trusted authorisation service 18) contacting a banking infrastructure (e.g. Mastercard, here the goods authorisation infrastructure 14) to verify credentials of a card that has been issued by an issuing bank (here the goods management processor 8) in order to authorise a transaction between the card (here the authentication device 2 hosting a virtual card) and a merchant terminal (here the terminal 16) associated with the acquiring bank.

Figure 5 shows schematically a method of changing the ownership of goods associated with an authentication device, according to an embodiment of the invention. For example, the method illustrated in Figure 5 may be performed after a potential new buyer has successfully verified the authenticity of goods using the method of Figure 4, and agreed to acquire the goods. In embodiments, the method of changing the ownership of goods described below may be performed after performing the method of verifying the ownership of goods as described by reference to Figure 4. In embodiments, only the method of changing the ownership of goods described below may be performed, independently of whether the method described by reference to Figure 4 was previously performed.
In the embodiment shown on Figure 5, the current owner of goods (e.g. the goods provider 2) is provided with an authentication device 12 in the form of a mobile phone (though as the skilled person would understand, other computing device, fixed or mobile may be used - in particular when the authentication device 12 is a card or chip, some of the steps described herein as performed by the authentication device may in fact by performed by a terminal interacting with the card or chip), which is equipped with an application that performs a function similar to a mobile payment application (for example the Mastercard Cloud Based Payment mobile payment application), referred to as "wallet" on Figures 4 and 5. As mentioned in relation to Figure 4, for simplicity, the application will be referred to as a mobile payment application, although as the skilled person would understand, the application may in practice be a separate application that performs similar functions. In embodiments the application may be a mobile payment application. The tokenised identifier 60 associated with goods 4 that the owner may wish to sell is stored in the mobile payment application, together with its associated cryptographic elements, thereby forming a set of data that is equivalent to a virtual payment card.
The owner (or goods provider 2) can therefore open 500 the mobile payment application on their mobile device 12, select 502 the virtual card that they wish to use (wherein each virtual card comprises a tokenised identifier 60 in place of a tokenised PAN that would be part of a virtual card in a payment system, and each tokenised identifier 60 is associated with an instance of goods 4, itself associated with a unique identifier 6 that was used by the goods authentication infrastructure 14 to generate the tokenised identifier 60, as explained above). In this case, the virtual card that the owner 2 wants to use is the virtual card associated with the goods 4 that the current owner wishes to associate with the new owner, for example because they have just sold the goods to the new owner (referred to as "buyer" on Figure 5).
The owner (or goods provider 2) can then authenticate 504 themselves on the mobile payment application, for example using known consumer device cardholder verification methods (e.g. fingerprint, mobile PIN, etc.). The mobile payment application will then prepare 506 card credentials using the tokenised identifier 60. The card-like credentials may include the tokenised identifier 60 and a cryptogram which represents a digital authentication code of the message and allows the recipient to verify the source and content of the message. The mobile device 12 then communicates with the terminal 16 of the potential new owner (referred to as "buyer" on the Figure 5) to request 508 information identifying the buyer. In the embodiment illustrated on Figure 5, the terminal 16 is a mobile phone (or other computing device) equipped with a mobile payment application, as described above. The mobile payment application may enable the terminal 16 to receive the request sent by the authentication device 12 at step 508, and to send 510 information allowing the buyer to be identified as a specific user of the mobile payment application.
The authentication device 12 then communicates with the goods authentication infrastructure 14 to request a change of ownership of the goods associated with the virtual card, by providing the tokenised identifier 60, cryptogram and buyer information that has been prepared by the authentication device 12 at step 506 or collected at step 510. In embodiments, this may be done via the mobile payment application, which may provide an interface to the services of the goods authentication infrastructure 14. In embodiments, the communication with the goods authentication service 14 may be made via the goods management processor 8. By analogy to a payment system, this would be similar to a cardholder contacting their issuing bank to request that a virtual card is blocked and a new virtual card should be issued (with the exception that, as will be explained further below, the new virtual card is not issued to the same owner as the virtual card that is blocked).
The goods authentication infrastructure 14 validates 514 the cryptogram and checks the cardholder's credentials, then detokenizes 516 the tokenised identifier 60, i.e. retrieves the unique identifier 6 (referred to on Figure 5 as "serial number") associated with the tokenised identifier 60. The goods authentication infrastructure 14 then disconnects 518 the tokenised identifier 60 from the unique identifier 6. This may comprise the goods authentication infrastructure 14 blocking the tokenised identifier 60 (i.e. marking it as obsolete and removing its association with the unique identifier 6). This may also comprise the goods authentication infrastructure 14 sending instructions to disable the tokenised identifier locally, at the authentication device 12, as will be discussed further below.
The goods authentication infrastructure 14 then generates 520 a new tokenised identifier 60 and associates this to the unique serial number 6 of the goods that are being associated with new ownership details. The new tokenised identifier 60 is used to generate 522 a new virtual card associated with the new owner (i.e. a set of information comprising the new tokenised identifier 60 and cryptographic elements similar to those that would be associated with a tokenised PAN to generate a virtual card, in a payment system). Through this process, the goods authentication infrastructure 14 ensures that each unique identifier 6 is only associated with a single tokenised identifier 60 (and as such a single virtual card hosted on an authentication device 12) at any one point in time.
The new virtual card are then communicated 524 by the goods authentication infrastructure 14 to the terminal 16 of the new owner of the goods. The terminal 16 records the new card details on the mobile payment application, and confirms 526 that the new virtual card is now hosted on mobile payment application running on terminal 16. This operation completes the registration of the new owner as owner of the goods, and enables the terminal 16 to act as the new authentication device 12 associated with the goods. Should the new owner wish to transfer ownership of the goods again, the steps above can be repeated with the terminal 16 now acting as an authentication device 12, and a terminal 16 of the next potential new owner of the goods 4.
Optionally, the goods authentication service 14 may also send 528 a message to the (former authentication device 12 (i.e. the mobile phone of the previous owner), comprising instructions to delete the (now blocked) virtual card associated with the goods that have now changed ownership. A confirmation message may be sent 530 by the mobile phone of the previous owner to the goods authentication infrastructure 14.
While specific embodiments were described in detail above, the skilled person will appreciate that alternative embodiments may readily be devised that still fall within the scope of the claims. The scope of the invention is defined by the spirit and scope of the claims and is not limited by the embodiments described here.

## Claims

1. A method for a processor of a goods authentication infrastructure to authenticate goods associated with a unique identifier, the method comprising:
the processor associating a tokenised identifier with the unique identifier of the goods; and
the processor communicating with an authentication device to provide the tokenised identifier and cryptographic elements to the authentication device;
wherein the cryptographic elements can be used by the authentication device to generate a message with a digital authentication code and the digital authentication code can be used by a computing device receiving the message to verify the content of the message; and
wherein a single tokenised identifier is associated with the unique identifier of the goods at any one time.

2. The method of claim 1, further comprising the processor recording the tokenised identifier and the unique identifier of the goods in one or more databases.

3. The method of any preceding claim, further comprising:
the processor receiving a request from a computing device to verify the content of a message comprising the tokenised identifier and digital authentication code,
the processor verifying the authenticity and integrity of the message using the digital authentication code, and
the processor detokenising the tokenised identifier to determine the unique identifier of the goods.

4. The method of claim 3, wherein the message contains information about the goods, and the method further comprises the processor communicating with a goods management processor to request an authorisation message if the goods management processor can verify the information in the message.

5. The method of any preceding claim, further comprising the processor blocking a tokenised identifier associated with a unique identifier of goods before generating a new identifier.

6. The method of claim 5, further providing the processor sending instructions to an authentication device holding the tokenised identifier that has been blocked to automatically block the tokenised identifier.

7. The method of any preceding claim, wherein the authentication device is a modified payment card, chip or computing device executing a payment application and the tokenised identifier and cryptographic element form a virtual card hosted on the authentication device.

8. The method of any preceding claim, wherein the goods authentication infrastructure is part of a transaction infrastructure, or wherein the goods authentication infrastructure is a token service provider.

9. A processor configured to perform the method of any of Claims 1 to 8.

10. A method for authenticating goods using an authentication device, the method comprising:
the authentication device receiving and recording a tokenised identifier and cryptographic elements associated with the tokenised identifier;
the authentication device receiving a request to authenticate goods from a computing device;
the authentication device generating an authenticated message comprising the tokenised identifier and information identifying the owner of the authentication device; and
the authentication device sending the authenticated message to the computing device;
wherein the tokenised identifier is associated with a unique identifier on the goods, and a single tokenised identifier is associated with the unique identifier of the goods at any one time.

11. The method of claim 10, wherein authenticating goods comprises authenticating the holder of the authentication device as the genuine owner of the goods, and the method further comprises:
the authentication device requesting the holder of the authentication device to provide authentication credentials;
the authentication device verifying the authentication credentials;
the authentication device recording the outcome of this authentication in cryptographic elements associated with the tokenised identifier;
the authentication device sending the cryptographic elements to the computing device as part of the authenticated message, thereby enabling the computing device to communicate with a processor of a goods authentication infrastructure to validate the cryptographic elements.

12. The method of any of claims 10 or 11, further comprising the authentication device requesting information from the computing device, wherein the information identifies the owner of the computing device.

13. The method of claim 12, wherein the authenticated message comprises information identifying the owner of the computing device, and the method further comprises the authentication device sending a message to a goods authentication infrastructure to record the owner of the computing device as owner of the goods, receiving a message confirming that the tokenised identifier is no longer associated with the goods and deleting the tokenised identifier and cryptographic elements associated with the tokenised identifier.

14. An authentication device configured to perform the method of any of claims 10 to 13.

15. The authentication device of claim 14, wherein the authentication device is a modified payment card or chip interacting with a computing device, or computing device executing a payment application and the tokenised identifier and cryptographic elements form a virtual card hosted on the authentication device.
